(19) Europäisches Patentamt

European Patent Office

Office européen des brevets

(11) Veröffentlichungsnummer: **0 416 266 A1**

## (12) EUROPÄISCHE PATENTANMELDUNG

(21) Anmeldenummer: 90114348.7

(22) Anmeldetag: 26.07.90

(51) Int. Cl.⁵: **B62D 6/00**, //B62D119/00, B62D121/00,B62D117/00, B62D101/00,B62D5/04

(30) Priorität: 02.09.89 DE 3929176

(43) Veröffentlichungstag der Anmeldung:
**13.03.91 Patentblatt 91/11**

(84) Benannte Vertragsstaaten:
**DE FR IT**

(71) Anmelder: **ROBERT BOSCH GMBH**
**Postfach 10 60 50**
**W-7000 Stuttgart 10(DE)**

(72) Erfinder: **Kirberg, Uwe, Dr.-Ing.**
**Im Eichrain 5**
**W-7145 Markgröningen-Unterriexingen(DE)**
Erfinder: **Bischof, Hubert, Dr.-Ing.**
**Im Hörnle 28**
**W-7143 Vaihingen/Enz(DE)**
Erfinder: **Konigorski, Ulrich-Eugen, Dr.-Ing.**
**Markgrafenstrasse 46**
**W-7520 Bruchsal 7(DE)**

(54) **Elektromotorische Servolenkung.**

(57) Die Erfindung betrifft eine Servolenkung für ein Fahrzeug, insbesondere für Personen- und Lastkraftwagen, mit einem elektromechanischen Servoantrieb, der die zu lenkenden, an einer Radtragkonstruktion gelagerten Räder anlenkt und mit einem Lenkrad des Fahrzeugs zusammenwirkt. Sie schlägt einen Regler (15) vor, dem zur Bildung einer Regeldifferenz $(r_d)$ ein vom Fahrer beim Lenken aufzubringendes Lenkradmoment $(m_{LR})$ und ein Lenkmoment $(m_{Lenk})$ zugeführt wird, wobei das Lenkmoment $(m_{Lenk})$ das zwischen dem Servoantrieb und der Radtragkonstruktion auftretende Betätigungsmoment ist und die am Lenkrad auftretenden Kräfte unter Berücksichtigung der mechanischen Rückwirkung auf vorgebbare Werte geregelt werden.

Fig. 1

EP 0 416 266 A1

## ELEKTROMOTORISCHE SERVOLENKUNG

Stand der Technik

Die Erfindung betrifft eine Servolenkung für ein Fahrzeug, insbesondere für Personen- und Lastkraftwagen, mit einem vorzugsweise elektromechanischen Servoantrieb, der die zu lenkenden, an einer Radtragkonstruktion gelagerten Räder anlenkt und mit einem Lenkrad des Fahrzeugs zusammenwirkt.

Im Fahrzeugbau ist es bekannt, die Lenkkräfte selbst bei kleiner Übersetzung, d.h. also wenigen Lenkradumdrehungen, niedrig zu halten, indem sogenannte Hilfskraftlenkungen (Servolenkungen) zum Einsatz kommen. Bei einer Servolenkung mit elektromechanischem Servoantrieb werden die an der Radtragkonstruktion zusätzlich angreifenden Hilfslenkkräfte von einem Elektromotor (Servomotor) aufgebracht.

Die bekannten elektromechanischen Servolenkungen arbeiten nach dem Prinzip der Kraftverstärkung, d.h. ein am Lenkrad des Fahrzeugs aufgebrachtes Lenkradmoment wird von dem elektromechanischen Servoantrieb verstärkt und auf die Radtragkonstruktion übertragen. Diesen Servolenkungen haftet oftmals der Nachteil an, daß sie dem Fahrer über das Lenkrad keinen guten Kontakt zur Fahrbahn vermitteln, zu Schwingungen neigen und überdies kein befriedigender selbsttätiger Rücklauf der gelenkten Räder in die Geradeausfahrt-Position erfolgt. Letzteres wird durch reibungsbedingte Verspannungszustände zwischen dem Servomotor mit Getriebe und dem Rad/Straße-Kontakt hervorgerufen.

Vorteile der Erfindung

Die erfindungsgemäße Servolenkung mit den im Hauptanspruch genannten Merkmalen hat demgegenüber den Vorteil, daß sie ein schwingungsarmes, fahrtechnisch gefühlvolles und direktes Lenkverhalten aufweist und perfekte Rücklaufeigenschaften besitzt. Erfindungsgemäß wird ein Regler eingesetzt, dem zur Bildung einer Regeldifferenz ein vom Fahrer beim Lenken aufzubringendes Lenkradmoment und ein Lenkmoment zugeführt wird. Das Lenkmoment entspricht dem Betätigungsmoment zwischen dem Servoantrieb und der Radtragkonstruktion. Im Gegensatz zum Stand der Technik, bei dem lediglich ein am Lenkrad aufgebrachtes Lenkradmoment verstärkt an die Radtragkonstruktion weitergegeben wird, sieht die Erfindung eine Regelung der am Lenkrad auftretenden Kräfte vor. Dieses erfolgt dadurch, daß bei der Bildung der Regeldifferenz das mit einem entsprechenden Sensor erfaßte Lenkmoment herangezogen wird. Über die stets vorhandene mechanische Rück wirkung, d.h. dem mechanischen Kraftdurchgriff der an den zu lenkenden Rädern auftretenden Kräfte zum Lenkrad, wird dem Fahrer in Abhängigkeit von der Größe des jeweils vorliegenden, momentanen Lenkmoments ein entsprechend kleineres, vorgebbar bewertetes Moment am Lenkrad vermittelt. Die Erfindung beruht daher auf einer völlig neuen Betrachtungsweise, nämlich von "unten nach oben". Hierunter ist die Kraftflußrichtung von den zu lenkenden Rädern bis zum Lenkrad zu verstehen. In Abhängigkeit vom Lenkmoment wird somit die am Lenkrad zu spürende Kraft geregelt. Eine am Lenkrad vom Fahrer des Fahrzeugs vorgenommene Lenkbewegung muß man sich demgemäß vom Kraftfluß her wie folgt vorstellen: Diese Lenkbewegung führt zu einem Torsionsmoment zwischen dem Servosystem und der die Räder aufweisenden Radtragkonstruktion. Hierdurch kommt es zu einem servomotor-unterstützten Einschlag der Räder, wobei aufgrund des erfindungsgemäßen Prinzips ("von unten nach oben") die auf das Lenkrad zurückwirkenden Kräfte stets auf gewünschte, vorgebbare Werte gehalten werden. Insofern werden auch ausschließlich "unten" bewirkte Kräfte bzw. Momente (z.B. durch eine Bodenwelle) in entsprechender, gewünschter, abgeschwächter Form an den Fahrer über das Lenkrad weitergegeben. Während bei den bekannten Servolenkungen des Standes der Technik aufgrund des Kraftverstärkungsprinzips von "oben nach unten" kleine Änderungen des Lenkradmoments große Änderungen des Lenkmoments zur Folge haben, was eine erhebliche Schwingungsneigung mit sich bringt, wird bei der Erfindung das Lenkmoment selbst zur Bildung der Regeldifferenz herangezogen, d.h. hier lassen sich Schwingungen von vorn herein durch entsprechendes Ausregeln vermeiden.

Nach einer Weiterbildung der Erfindung ist vorgesehen, daß die Werte für das Lenkradmoment in Abhängigkeit vom Fahrzeug- und/oder Fahrzustand mittels einer Kennlinienschar und/oder eines Algorithmus' einer Bewertungsschaltung beeinflußt werden. Als Einflußgrößen sind hier insbesondere die Fahrzeuggeschwindigkeit, die Giergeschwindigkeit, die Gierbeschleunigung oder aber auch die Beladung zu nennen.

Das vom Fahrer beim Lenken -also beim Einleiten einer Kurve- aufzubringende Lenkradmoment bildet einen Istwert und das Lenkmomen bildet einen Sollwert für den Regler. Beim selbsttätigen Rücklauf der Lenkung -also von der Kurvenfahrt in die Geradeausfahrt- liegen umgekehrte Verhältnisse vor. Hier bildet das Lenkmoment den Istwert und das Lenkradmoment den Sollwert für den Regler. Hierdurch wird ein ausgezeichnetes Rücklaufverhalten erreicht. Regelabweichungen -wie sie aufgrund der erwähnten Verspannungszustände bei den Vorrichtungen des Standes der Technik auftreten können, liegen beim Gegenstand der Erfindung nicht vor.

Vorzugsweise wird der Bewertungsschaltung als Eingangsgröße das Lenkmoment zugeführt. Als Ausgangsgröße gibt sie ein Kennlinien-Moment ab, das zur Bildung der Regeldifferenz einer Summationsstelle zugeführt wird. Die Zuführung erfolgt vorzugsweise mit negativem Vorzeichen. Durch die Kennlinienschar und/oder den Algorithmus der Bewertungsschaltung läßt sich in Abhängigkeit des Lenkmoments das Lenkradmoment in weiten Bereichen einstellbar machen und somit neben der Abhängigkeit von den oben genannten Einflußgrößen auch dem Fahrerwunsch individuell anpassen. Insbesondere kann für Fahrerinnen ein entsprechend kleineres Lenkradmoment als bei Fahrern einstellbar sein.

Vorteilhaft ist es, wenn eine Dämpfungsschaltung vorgesehen wird, die der Summationsstelle ein die Regeldifferenz beeinflussendes Dämpfungsmoment zuführt. Das Dämpfungsmoment kann vom Lenkmoment und/oder der Lenkgeschwindigkeit und/oder der Fahrzeuggeschwindigkeit abhängig sein. Über das Lenkmoment läßt sich die Betätigungsrichtung der Lenkung erfassen, wobei unterschiedliche Dämpfungswerte je nach Betätigungsrichtung vorgesehen sein können. Unter Betätigungsrichtung der Lenkung ist hier zum einen das Einschlagen der Räder, d.h. also von der Geradeausfahrt zur Kurvenfahrt, und zum anderen das Rückstellen der Räder, also von der Kurvenfahrt zur Geradeausfahrt, zu verstehen. Die Lenkgeschwindigkeit betrifft die Schnelligkeit, mit der der Fahrer das Lenkrad dreht (Drehwinkel pro Zeiteinheit) bzw. (beim Rücklauf) die Gewindigkeit, mit der die Räder in die Geradeausfahrtstellung zurückkehren.

Eine Weiterbildung der Erfindung sieht einen Dynamik-Regler vor, der parallel zum zuvor beschriebenen Regler (Kennlinien-Regler) liegt und als Eingangsgröße das Lenkradmoment und das Lenkmoment erhält. Dieser Dynamik-Regler hat die Aufgabe, dynamische Störeinflüsse (z.B. Getriebeoberwelligkeiten) des zwischen Servomotor und Radtragkonstruktion geschalteten Getriebes zu eliminieren, während der Kennlinien-Regler die statische Einhaltung der Kennlinienschar der Bewertungsschaltung garantiert. Darüber hinaus dient der Dynamik-Regler zur Verbesserung der Eigendynamik des Systems, indem er die dominanten Eigenfrequenzen dämpft.

Ferner kann ein unterlagerter Servomotor-Drehzahlregler zur Elimination des Motor-Massenträgheitsmoments vorgesehen sein. Überdies werden hierdurch die Haft- und Gleitreibungseffekte des Servomotors im Sinne eines positiven Lenkgefühls wesentlich reduziert, so daß der Fahrer sie nicht mehr spürt.

Nach einer bevorzugten Ausführungsform ist dem Servomotor-Drehzahlregler eine Linearisierungsschaltung nachgeschaltet. Diese dient dazu, Nichtlinearitäten zwischen der Schaltungsanordnung und dem Servomotor auszugleichen. Insbesondere kann der Servomotor von einem Steller angesteuert sein, der Nichtlinearitäten aufweist. Als Steller kommen bevorzugt steuerbare Halbleiter-Bauelemente zum Einsatz.

Es ist vorteilhaft, wenn der Steller einen Stromregelkreis aufweist.

Schließlich kann -alternativ zum elektromechanischen Servoantrieb- der eingesetzte Servoantrieb nach dem hydraulischen Prinzip arbeiten.

## Zeichnung

Die Erfindung wird im folgenden anhand der Figuren näher erläutert. Es zeigen:
Figur 1 ein Blockschaltbild der erfindungsgemäßen Servolenkung und
Figur 2 ein Diagramm, das die Abhängigkeit eines Lenkradmoments vom Lenkmoment zeigt.

## Beschreibung des Ausführungsbeispiels

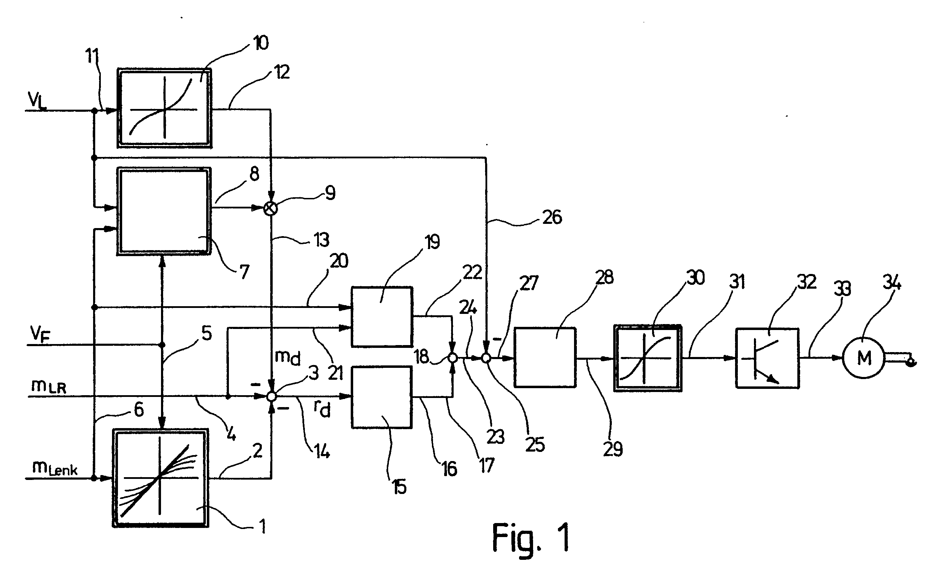

Die Figur 1 zeigt ein Blockschaltbild, das den Aufbau der erfindungsgemäßen Servolenkung verdeutlicht. Von einem geeigneten, nicht dargestellten Sensor wird ein Lenkmoment $m_{Lenk}$ einer Bewertungsschaltung 1 zugeführt. Der Ausgang 2 der Bewertungsschaltung 1 ist an eine Summationsstelle 3 angeschlossen. Die Ausgangsgröße der Bewertungsschaltung 1 wird der Summationsstelle 3 mit negativem Vorzeichen zugeführt. Das vom Fahrer eines nicht dargestellen Fahrzeugs, das die erfindungsgemäße Servolenkung aufweist, beim Lenken am Lenkrad aufgebrachte Lenkradmoment $m_{LR}$ wird ebenfalls der Summationsstelle 3 über eine Leitung 4 zugeführt. Ferner nimmt ein geeigneter, nicht dargestellter Sensor die Fahrgeschwindigkeit $v_F$ des Fahrzeugs auf und liefert über eine Leitung 5 dementsprechende Informationen an die Bewertungsschaltung 1.

Über eine Leitung 6 wird das Lenkmoment $m_{Lenk}$ an den Eingang einer Dämpfungsschaltung 7 gegeben. Die Dämpfungsschaltung 7 ist ferner mit der Leitung 5 verbunden, so daß auch die Fahrgeschwindigkeit $v_F$ zugeführt wird.

Schließlich nimmt ein weiterer Sensor die an der Lenksäule vom Fahrer vorgegebene bzw. die sich beim Rücklauf der Lenkung ergebende Lenkgeschwindigkeit $v_L$ (Drehwinkel pro Zeiteinheit) auf und liefert entsprechende Daten an einen weiteren Eingang der Dämpfungsschaltung 7. Der Ausgang 8 der Dämpfungsschaltung 7 führt zu einer Multiplikationsstelle 9.

Ferner ist eine Kennlinienschaltung 10 vorgesehen, die als Eingangsgröße 11 die Lenkgeschwindigkeit $v_L$ erhält und deren Ausgang 12 mit der Multiplikationsstelle 9 verbunden ist. Der Ausgang 13 der Multiplikationsstelle 9, der ein Dämpfungsmoment $m_d$ abgibt, führt -mit gleichem Vorzeichen wie Ausgang 2 der Bewertungsschaltung 1- zur Summationsstelle 3.

An den Ausgang 14 der Summationsstelle 3 ist ein Regler 15 (Kennlinien-Regler) angeschlossen, dem insofern der am Ausgang 14 der Summationsstelle 3 vorliegende Wert als Regeldifferenz $r_d$ zugeführt wird. Der Ausgang 16 des Reglers 15 ist über eine Leitung 17 mit einer Summierstelle 18 verbunden.

Ferner ist ein Dynamik-Regler 19 vorgesehen, der als erste Eingangsgröße über eine Leitung 20 das Lenkmoment $m_{Lenk}$ und als zweite Eingangsgröße über eine Leitung 21 das Lenkradmoment $m_{LR}$ erhält. Der Ausgang 22 des Dynamik-Reglers 19 ist als weitere Eingangsgröße an die Summierstelle 18 angeschlossen. Der Ausgang 23 der Summierstelle 18 steht mit einem Eingang 24 einer weiteren Summierstelle 25 in Verbindung. Der Summierstelle 24 wird - mit negativem Vorzeichen - ferner die Lenkgeschwindigkeit $v_L$ zugeführt. Dies erfolgt über eine Leitung 26.

Der Ausgang 27 der Summierstelle 25 ist an einen unterlagerten Servomotor-Drehzahlregler 28 angeschlossen. Dessen Ausgangswert 29 wird einer Linearisierungsschaltung 30 zugeführt. Deren Ausgang 31 führt zu einem Steller 32, der steuerbare Halbleiter-Bauelemente aufweist. Diese steuern über den Ausgang 33 des Stellers 32 einen Servomotor 34 an, der die bereits erwähnte, jedoch nicht dargestellte Radtragkonstruktion über ein entsprechendes Lenkgetriebe beaufschlagt. Dem Steller 32 ist ein - nicht näher dargestellter - Stromregelkreis unterlagert.

Die erfindungsgemäße Servolenkung arbeitet folgendermaßen:

Treten durch den Lenkvorgang des Fahrers und/oder den Fahrzustand des Fahrzeugs Regeldifferenzen $r_d$ auf, so werden diese von dem Regler 15 erfaßt, der an seinem Ausgang 16 ein entsprechendes Ausgangssignal bildet. Dieses durchläuft dann die Summierstelle 18 und trifft auf die Summierstelle 25. Von weiteren, möglichen Einflußgrößen (Lenkgeschwindigkeit $v_L$, Ausgangswert des Dynamik-Reglers 19) einmal abgesehen, wird die Ausgangsgröße des Reglers 15 dem Servomotor-Drehzahlregler 28 zugeführt, der das stets vorhandene Motor-Massenträgheitsmoment des Servomotors 34 eliminiert. Ebenso werden Haft-und Gleitreibungseffekte des Servomotors 34 reduziert. Der Ausgangswert 29 des Servomotor-Drehzahlreglers 28 gelangt zur Linearisierungsschaltung 30, die Nichtlinearitäten insbesondere des nachfolgenden Stellers 32 durch eine entsprechende Kennlinie oder aber durch einen Algorithmus berücksichtigt. Über den Ausgang 31 wird der Steller 32 derart angesteuert, daß dieser den Servomotor 34 verstellt, so daß die zuvor erwähnte Regeldifferenz $r_d$ auf Null ausgeregelt wird.

Die Regeldifferenz $r_d$ setzt sich - ohne Betrachtung des Dämpfungsmoment $m_d$ - aus der Differenz des Lenkradmoments $m_{LR}$ und dem Lenkmoment $m_{Lenk}$ zusammen, wobei letzteres von der Bewertungsschaltung 1 bewertet wird. Die Bewertungsschaltung 1 weist eine Kennlinienschar oder - nach einem nicht dargestellten Ausführungsbeispiel - einen Algorithmus auf, die bzw. der von dem Fahrzeugzustand und/oder dem Fahrzustand des Fahrzeugs abhängig ist. Als Fahrzeugzustandsabhängigkeit kommt beispielsweise die Beladung des Fahrzeugs in Betracht. Beim dargestellten Ausführungsbeispiel ist eine Abhängigkeit vom Fahrzustand des Fahrzeugs gezeigt, und zwar wird der am Ausgang 2 der Bewertungsschaltung ausgegebene Wert von der Fahrgeschwindigkeit $v_F$ des Fahrzeugs beeinflußt (Zuführung der Fahrgeschwindigkeit $v_F$ durch die Leitung 5).

Aus der Figur 1 ist ersichtlich, daß die Regeldifferenz $r_d$ von dem Dämpfungsmoment $m_d$ beaufschlagt wird. Zur Erzeugung des Dämpfungsmoments $m_d$ ist die Dämpfungsschaltung 7 und die Kennlinienschaltung 10 sowie die Multiplikationsstelle 9 eingesetzt. Die Dämpfungsschaltung 7 erzeugt in Abhängigkeit von der Lenkgeschwindigkeit $v_L$, dem Lenkmoment $m_{Lenk}$ und der Fahrgeschwindigkeit $v_F$ einen entsprechenden Dämpfungswert. Die Lenkgeschwindigkeit $v_L$ wird ferner mittels der Kennlinienschaltung 10 gewichtet. Dieses kann beispielsweise linear, progressiv oder degressiv erfolgen. Die Ausgangswerte der Kennlini enschaltung 10 und der Dämpfungsschaltung 7 werden an der Multiplikationsstelle 9 multipliziert und dann als Ergebnis (Dämpfungsmoment $m_d$) der Summationsstelle 3 als weitere Einflußgröße zugeleitet. Durch die Zuleitung des Lenkmoments $m_{Lenk}$ zur Dämpfungsschaltung 7 erfolgt eine Einflußnahme im Hinblick auf die Betätigungsrichtung der Lenkung. Dieses bedeutet, daß der Dämpfungswert in Abhängigkeit davon eingestellt wird, ob die Lenkung von einer Geradeausfahrt in eine Kurvenfahrt oder von einer Kurvenfahrt in eine Geradeausfahrt betätigt wird.

Um dynamische Einflüsse sehr schnell erkennen und im Störungsfalle ausregeln zu können, ist der Dynamik-Regler 19 vorgesehen, der insbesondere störende Getriebeoberwelligkeiten des Lenkgetriebes und dergleichen eliminiert. Ferner dämpft er die dominanten Eigenfrequenzen des Systems.

Die erfindungsgemäße Servolenkung besitzt ausgezeichnete Rücklaufeigenschaften. Für den nach Kurvenfahrt selbsttätig erfolgenden Rücklauf sei angenommen, daß der Fahrer das Lenkrad losläßt. In diesem Falle nimmt das Lenkradmoment $m_{LR}$ den Wert "Null" an. Da beim Rückstellen das Lenkradmoment $M_{LR}$ den Sollwert und das Lenkmoment $m_{Lenk}$ den Istwert bildet, ist das Lenkmoment $m_{Lenk}$ bestrebt, den Wert "Null" anzunehmen, da bei einer Regelung der Istwert stets bestrebt ist, den Wert des Sollwerts anzunehmen. Mithin wird sich das Lenkmoment $m_{Lenk}$ ebenfalls auf den Wert "Null" einstellen, d.h. es liegt dann Geradeausfahrt des Fahrzeugs vor.

Umgekehrte Verhältnisse ergeben sich bei einem Lenkvorgang des Fahrers. Der Fahrer gibt ein bestimmtes Lenkradmoment $m_{LR}$ als Istwert vor, dem sich das Lenkmoment $m_{Lenk}$ als zunächst davon abweichender Sollwert während der Regelphase anpaßt.

Da bei der erfindungsgemäßen Servolenkung auftretende Lenkmomente $m_{Lenk}$ ausgeregelt werden, werden sich über die mechanische Rückwirkung zum Lenkrad auch am Lenkrad die entsprechenden Kräfte einstellen, wobei - je nach Kennlinie- oder Algorithmusausbildung sowie sonstige Einflußnahme - die am Lenkrad auftretenden Kräfte auf gewünschte, vorgebbare Werte eingestellt werden können. Hierbei ist es sogar möglich, fahrerindividuelle Einstellungen vorzunehmen. Insbesondere können die am Lenkrad aufzubringenden Kräfte für eine Fahrerin kleiner eingestellt werden als für einen Fahrer.

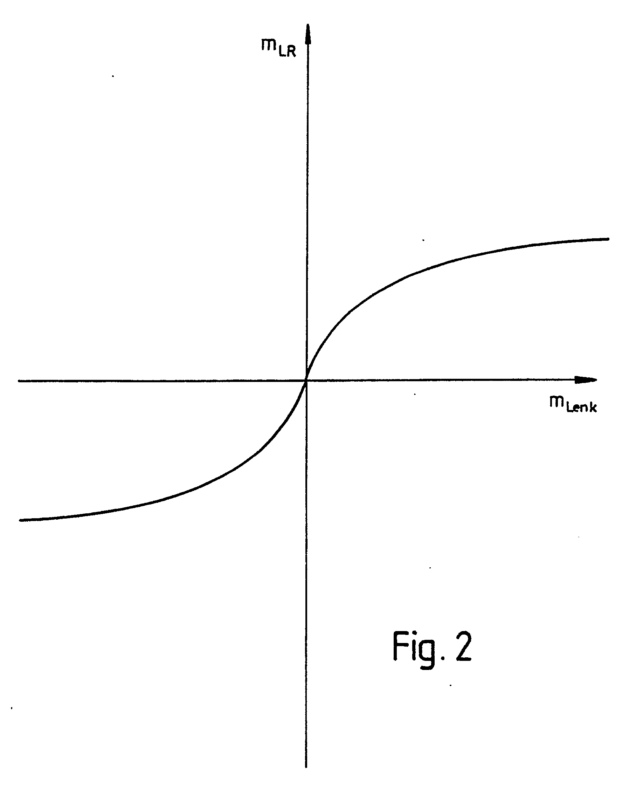

Überdies besteht eine extrem gute Schwingungsdämpfung bei der erfindungsgemäßen Anordnung. Während im Stand der Technik durch die erfolgende Verstärkung der Lenkradkraft bereits kleine Änderungen des Lenkradmoments zu großen Änderungen des Lenkmoments führen, was stets eine Schwingungsneigung mit sich bringt, wird - gemäß Figur 2 - bei einer Änderung des Lenkmoments $m_{Lenk}$ (Abszisse) nur eine relativ kleine Änderung des Lenkradmoments $M_{LR}$ (Ordinate) erfolgen, da die Kennlinie einen degressiven Verlauf aufweist. Im Zusammenhang mit dem erfindungsgemäßen Regelprinzip ist ein schwingungsarmes System gegeben.

Die erfindungsgemäße Lösung zeichnet sich durch eine besondere Art der Kennlinienverarbeitung für die Dämpfung und die Hilfskraftunterstützung aus. Dabei liegt eine Trennung des Stör- und des Führungsverhaltens der Regelung mittels des Dynamik-Reglers 19 und des Kennlinien-Reglers 15 vor. Insofern läßt sich weitgehend unabhängig das Führungs-und Störverhalten einstellen. Wie bereits ausgeführt, wird eine Elimination der Motor-Massenträgheit durch den Servomotor-Drehzahlregler 28 herbeigeführt. Da weder Massenträgheits-noch Haftreibungseffekte vom Servormotor 34 sowie dessen Getriebe auftreten, ist ein schwingungsfreies Verhalten gewährleistet. Die Dämpfung ist drehrichtungs-bzw. betätigungsabhängig mittels der Zuführung des Lenkmoments $m_{Lenk}$ zur Dämpfungsschaltung 7 beeinflußbar. Ferner können ideale Lenkkraftbegrenzungskennlinien mittels der Bewertungsschaltung 1 vorgegeben werden. Aufgrund der von der Lenkgeschwindigkeit $v_L$ abhängigen Dämpfung ist ein dynamischer Eingriff gegeben. Eine "statische" Variation der Lenkhilfe erfolgt durch die Berücksichtigung der Fahrgeschwindigkeit $v_F$. Insofern ermöglicht die nach dem erfindungsgemäßen Regelprinzip arbeitende Servolenkung ein schwingungsarmes, fahrtechnisch gefühlvolles und direktes Lenkverhalten.

## Ansprüche

1. Servolenkung für ein Fahrzeug, insbesondere für Personen- und Lastkraftwagen, mit einem vorzugsweise elektromechanischen Servoantrieb, der die zu lenkenden, an einer Radtragkonstruktion gelagerten Räder anlenkt und mit einem Lenkrad des Fahrzeugs zusammenwirkt, **gekennzeichnet durch** einen Regler (15), dem zur Bildung einer Regeldifferenz ($r_d$) ein vom Fahrer beim Lenken aufzubringendes Lenkradmoment ($m_{LR}$) und ein Lenkmoment ($m_{Lenk}$) zugeführt wird, wobei das Lenkmoment ($m_{Lenk}$) das zwischen dem Servoantrieb und der Radtragkonstruktion auftretende Betätigungsmoment ist und die am Lenkrad auftretenden Kräfte unter Berücksichtigung der mechanischen Rückwirkung auf vorgebbare Werte geregelt werden.

2. Servolenkung nach Anspruch 1, **dadurch gekennzeichnet**, daß die Werte für das Lenkradmoment ($m_{LR}$) in Abhängigkeit vom Fahrzeug- und/oder Fahrzustand mittels einer Kennlinienschar und/oder eines Algo rithmus' einer Bewertungsschaltung (1) beeinflußt werden.

3. Servolenkung nach einem der vorhergehenden Ansprüche, **dadurch gekennzeichnet**, daß das vom Fahrer beim Lenken aufzubringende Lenkradmoment ($m_{LR}$) einen Istwert und das Lenkmoment ($m_{Lenk}$) einen Sollwert für den Regler (15) bildet.

4. Servolenkung nach einem der vorhergehenden Ansprüche, **dadurch gekennzeichnet**, daß beim selbsttätigen Rücklauf der Lenkung das Lenkmoment ($m_{Lenk}$) den Istwert und das Lenkradmoment ($m_{LR}$) den Sollwert für den Regler (15) bildet.

5. Servolenkung nach einem der vorhergehenden Ansprüche, **dadurch gekennzeichnet**, daß die Beeinflussung der Bewertungsschaltung (1) von der Fahrgeschwindigkeit ($V_F$) des Fahrzeugs abhängig ist.

6. Servolenkung nach einem der vorhergehenden Ansprüche, **dadurch gekennzeichnet**, daß die Bewertungsschaltung (1) als Eingangsgröße das Lenkmoment ($m_{Lenk}$) erhält und als Ausgangsgröße (Ausgang 2) ein Kennlinien-Moment abgibt, das zur Bildung der Regeldifferenz ($r_d$) einer Summationsstelle (3) zugeführt wird.

7. Servolenkung nach einem der vorhergehenden Ansprüche, **gekennzeichnet durch** eine Dämpfungsschaltung (7), die der Summationsstelle (3) ein die Regeldifferenz ($r_d$) beeinflussendes Dämpfungsmoment ($m_d$) zuführt.

8. Servolenkung nach einem der vorhergehenden Ansprüche, **dadurch gekennzeichnet**, daß der Dämpfungsschaltung zur Beeinflussung des Dämpfungsmoments ($m_d$) das Lenkmoment ($m_{Lenk}$) und/oder die Lenkgeschwindigkeit ($v_L$) und/oder die Fahrgeschwindigkeit ($V_F$) zugeführt wird.

9. Servolenkung nach einem der vorhergehenden Ansprüche, **gekennzeichnet durch** einen Dynamik-Regler (19), der parallel zum Regler (15) liegt und als Eingangsgrößen das Lenkradmoment ($m_{LR}$) und das Lenkmoment ($m_{Lenk}$) erhält.

10. Servolenkung nach einem der vorhergehenden Ansprüche, **gekennzeichnet durch** einen unterlagerten Servomotor-Drehzahlregler (28) zur Elimination des Motor-Massenträgheitsmoments.

11. Servolenkung nach einem der vorhergehenden Ansprüche, **gekennzeichnet durch** eine dem Servomotor-Drehzahlregler (28) nachgeschaltete Linearisierungsschaltung (30).

12. Servolenkung nach einem der vorhergehenden Ansprüche, **dadurch gekennzeichnet**, daß der Servomotor (34) von einem Steller (32) angesteuert wird, der einen Stromregelkreis aufweist.

13. Servolenkung nach einem der vorhergehenden Ansprüche, **gekennzeichnet durch** einen hydraulisch arbeitenden Servoantrieb.

Fig. 1

$m_{LR}$

$m_{Lenk}$

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0150589 (GENERAL MOTORS)<br>* Seite 11, Zeile 6 - Seite 13, Zeile 4; Figuren 3, 4 *<br>* Seite 13, Zeile 35 - Seite 17, Zeile 16; Figur 5 * | 1, 2, 6 | B62D6/00<br>//B62D119:00<br>B62D121:00<br>B62D117:00<br>B62D101:00 |
| Y | | 7-9 | B62D5/04 |
| | --- | | |
| X | GB-A-2167025 (HONDA)<br>* Seite 2, Zeilen 1 - 36 *<br>* Seite 2, Zeilen 54 - 64 *<br>* Seite 3, Zeilen 10 - 18 *<br>* Seite 3, Zeilen 30 - 35 * | 1 | |
| X | * Seite 7, Zeilen 34 - 65 * | 2 | |
| | --- | | |
| A | GB-A-2179012 (HONDA)<br>* Seite 1, Zeilen 52 - 84; Ansprüche 1-5 * | 1, 2, 6 | |
| Y | | 7-9 | |
| | --- | | |
| Y | GB-A-2205287 (FUJI)<br>* Seite 5, Zeile 9 - Seite 9, Zeile 24; Figuren * | 7, 8 | |
| | --- | | **RECHERCHIERTE SACHGEBIETE (Int. Cl.5)** |
| A | GB-A-2166395 (HONDA)<br>* das ganze Dokument *<br>----- | 3, 4 | B62D |

Der vorliegende Recherchenbericht wurde für alle Patentansprüche erstellt

| Recherchenort | Abschlußdatum der Recherche | Prüfer |
|---|---|---|
| BERLIN | 03 DEZEMBER 1990 | BROYDE, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)